(19) Europäisches Patentamt
European Patent Office
Office européen des brevets

(11) **EP 3 839 469 B1**

(12) **EUROPEAN PATENT SPECIFICATION**

(45) Date of publication and mention
of the grant of the patent:
**25.05.2022   Bulletin 2022/21**

(21) Application number: **19218487.7**

(22) Date of filing: **20.12.2019**

(51) International Patent Classification (IPC):
**G01M 1/04** *(2006.01)*     **G01M 1/22** *(2006.01)*
**G01M 17/013** *(2006.01)*

(52) Cooperative Patent Classification (CPC):
**G01M 1/045; G01M 1/225; G01M 17/013**

(54) **ROTOR BALANCER**

ROTORAUSWUCHTVORRICHTUNG

DISPOSITIF D'ÉQUILIBRAGE DE ROTOR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.06.2021   Bulletin 2021/25**

(73) Proprietor: **Robert Bosch S.p.A.**
**20149 Milano (IT)**

(72) Inventors:
• **POZZATO, Gabriele**
  **36066 Sandrigo (Vicenza) (IT)**
• **DAMBACH, Gerhard**
  **81827 München (DE)**
• **TANELLI, Mara**
  **26900 Lodi (IT)**
• **SAVARESI, Sergio Matteo**
  **36066 Sandrigo (Vicenza) (IT)**
• **STRADA, Silvia Carla**
  **57033 Marciana (Livorno) (IT)**

(74) Representative: **Bee, Joachim**
  **Robert Bosch GmbH**
  **C/IPE**
  **Wernerstrasse 51**
  **70469 Stuttgart (DE)**

(56) References cited:
**CN-A- 105 699 099**     **CN-A- 107 132 048**
**US-A1- 2015 167 780**

EP 3 839 469 B1

**Description**

BACKGROUND

Technical field

The present invention relates to a rotor balancer. Particularly, the rotor to be balanced can be a vehicle wheel, such as a car wheel.

Description of the Related Art

From the US 2015/167780 A1 wheel balancers are known to detect angular position and severity (i.e., the mass in grams) of unbalances in vehicle wheels. Indeed, when wheels are rotating, the presence of asymmetries in the mass distribution causes anomalous forces and torques on the axles, leading to vibrations and to ride disturbances. Wheel balancers detect these asymmetries in order to perform a balancing.

Two principal type of unbalance may arise: static unbalance and dynamic unbalance.

Static unbalance is the eccentricity of the center of gravity of a rotor, caused by a point mass at a certain radius from the wheel center of rotation. Static unbalances may arise both on the outer side and on the inner side of the wheel.

On the other side, a dynamic unbalance arises when two equal masses positioned at 180° from each other are placed symmetrically about the center of gravity and shifted along the rotor rotation axis.

With reference to vehicle wheels, both static and dynamic unbalances can be balanced by placing suitable balancing masses on the inner and/or on the outer wheel rims.

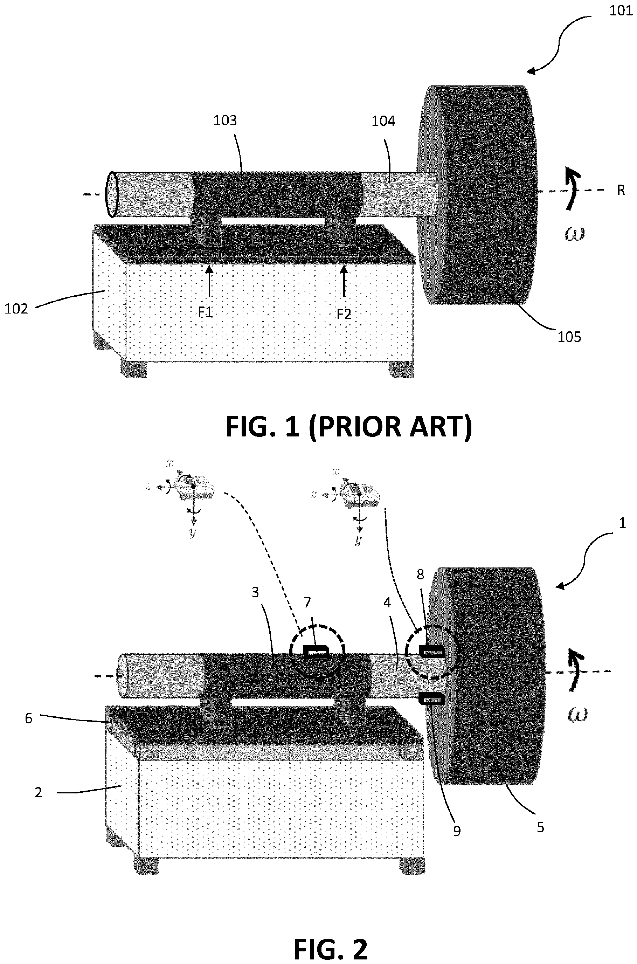

A wheel balancer 101 according to the known art is schematically shown in Fig. 1. The wheel balancer 101 comprises a base 102, a shaft support 103 rigidly positioned on the base 102, and a shaft 104 rotatable along a rotation axis R relative to the base 102. A wheel 105 to be balanced is mounted at one end of the shaft 104. When the unbalanced wheel 105 is rotated at constant speed co, two forces F1 and F2 are detected in two different positions of the shaft support 103 along the rotation axis R, from which the wheel 105 unbalances can be determined. Therefore, known wheel balancers mainly rely on force sensors, particularly on piezoelectric sensors. The major drawback of these sensors is that they are prone to lose calibration and accuracy during the wheel balancer lifetime. Moreover, these sensors are generally expensive and require a very stiff and solid structure. CN 107 132 048 discloses the usage of acceleration sensors to monitor the rotation of a testing device.

BRIEF SUMMARY OF THE INVENTION

The invention consists of a balancer for balancing a rotor as defined in claim 1 and a method for updating a balancer for balancing a rotor as defined in claim 13.

The problem underlying the present invention is therefore to provide a balancer allowing the balancing of a rotor, particularly of a vehicle wheel, without the need of force sensors.

This problem is solved by a balancer for balancing a rotor, particularly a vehicle wheel, comprising:

- a base;
- a shaft support connected to the base;
- a shaft rotatable along a rotation axis relative to the shaft support, configured such that the rotor to be balanced can be mounted on the shaft;
- a motor for actuating the shaft;
- one or more elastic elements positioned between the shaft support and the base, such that the shaft support is elastically suspended over the base;
- a first Inertial Measurement Unit (IMU) fixedly positioned on the shaft support and configured to measure a first and/or a second and/or a third accelerations, and/or a first and/or a second and/or a third angular speeds along three axes of a reference frame integrally moving with the first IMU, and to generate signals representative of the same;
- a second IMU fixedly positioned on the shaft at a radial distance from the shaft rotation axis, and configured to measure a first and/or a second and/or a third accelerations, and/or a first and/or a second and/or a third angular speeds along three axes of a reference frame integrally moving with the second IMU, and to generate signals representative of the same.

According to the invention, the detection of unbalanced masses is therefore attained relying on low-cost accelerometers and/or gyroscopes.

According to an embodiment, in the balancer normal condition of use, the shaft rotation axis is horizontal.

According to an embodiment, the first IMU is oriented such that a first axis of the first IMU reference frame is parallel to the shaft rotation axis and the other two axes lie on a plane perpendicular to the shaft rotation axis.

According to an embodiment, the first IMU is oriented such that a second of said other two axes is oriented vertically and a third of said other two axes is oriented horizontally.

According to an embodiment, the first IMU is configured to detect the first, the second and the third angular speeds along said three axes of the first IMU reference frame.

According to an embodiment, the fixed IMU is configured to further detect the first and the third accelerations along said first and third axes of the first IMU reference frame.

According to an embodiment, the second IMU is oriented such that a first axis of the second IMU reference frame is parallel to the shaft rotation axis, and a second and a third axes of said second IMU reference frame lie on a plane perpendicular to the shaft rotation axis.

According to an embodiment, the second IMU is configured to detect the second and the third angular speeds along said second and third axes of the second IMU reference frame.

According to an embodiment, the one or more elastic elements are configured such that the shaft support can oscillate vertically and horizontally relative to the base.

According to an embodiment, the one or more elastic elements have two different stiffness coefficients along the vertical and the horizontal displacement directions of the shaft support relative to the base.

According to an embodiment, the one or more elastic elements comprise one or more elastomer mounts placed between the shaft support and the base.

According to an embodiment, the balancer further comprises a balancing mass having the same mass as the second IMU, said balancing mass being fixedly positioned on the shaft in a position radially opposite to the radial position of the second IMU.

According to another aspect of the present invention, a method for updating a balancer for balancing a rotor, particularly a vehicle wheel, comprising a base, a shaft support fixedly connected to the base, a shaft rotatable along a rotation axis relative to the shaft support, a motor for actuating the shaft, comprises:

- positioning one or more elastic elements between the shaft support and the base, such that the shaft support becomes elastically suspended over the base;
- fixedly positioning a first IMU on the shaft support, said first IMU being configured to measure a first and/or a second and/or a third accelerations, and/or a first and/or a second and/or a third angular speeds along three axes of a reference frame integrally moving with the first IMU, and to generate signals representative of the same;
- fixedly positioning a second IMU on the shaft at a radial distance from the shaft rotation axis, said second IMU being configured to measure a first and/or a second and/or a third accelerations, and/or a first and/or a second and/or a third angular speeds along three axes of a reference frame integrally moving with the second IMU, and to generate signals representative of the same.

## BRIEF DESCRIPTION OF THE DRAWINGS

Further characteristics and advantages will be more apparent from the following description of preferred embodiments and of their alternatives given as a way of an example with reference to the enclosed drawings in which:

Figure 1 is schematic side view of a balancer according to the prior art;
Figure 2 is a schematic side view of a balancer according to an embodiment of the invention;
Figures 3-5 are diagrams showing the relation between an IMU signal amplitude and an unbalance severity in three different conditions.
Figures 6-7 are diagrams showing the relation between an IMU signal phase and an unbalance angular position in two different conditions.
Figure 8 is a block diagram showing the phases underlying a wheel balancer according to the invention.

## DETAILED DESCRIPTION OF THE INVENTION

In the following description, same alphanumeric references are used for analogous exemplary elements when they are depicted in different drawings.

A balancer 1 according to the invention is schematically shown in Fig. 2. The balancer 1 according to the invention can be used for balancing rotors of substantially any type. Preferably, the balancer 1 according to the invention is intended for balancing vehicle wheels. In the present description a vehicle wheel balancer will be mainly considered as an exemplary embodiment.

The balancer 1 comprises a base 2, a shaft support 3 connected to the base 2, and a shaft 4 rotatable along a rotation axis R relative to the shaft support 3. A rotor 5, for example a vehicle wheel, to be balanced can be mounted for example at one end of the shaft 4. The shaft 4 rotation can be actuated by a motor (not shown in the Figures).

With reference to the normal condition of use of the balancer 1, the shaft 4 rotation axis R is preferably horizontal, i.e. perpendicular to the gravitational acceleration $g_n$. The wheel 5 to be balanced is preferably mounted on the shaft 4 such that its rotation axis corresponds to the shaft 5 rotation axis.

According to the invention, the shaft support 3 is suspended over the base 2. To this purpose, the balancer 1 comprises one or more elastic elements 6 positioned between the shaft support 3 and the base 2, such that the shaft support 3 is elastically connected to the base 2 and suspended over the latter. Advantageously, the elastic elements 6 are configured such that the shaft support 3 can oscillate vertically (i.e. along a direction parallel to the gravity acceleration) and horizontally (i.e. along directions perpendicular to the gravity acceleration). In this manner, the rotation of the unbalanced wheel 5 mounted on the shaft 4 results in horizontal and vertical vibrations of the shaft support 3 over the base 2.

Advantageously, the one or more elastic elements 6 act both elastically and as dumping elements and, generally, have two different stiffness coefficients along the two displacement directions of the shaft support 3 relative to the base 2. Preferably, the stiffness coefficient along the vertical direction is higher than the stiffness coefficient along the horizontal directions.

According to an embodiment, the elastic elements 6 comprise one or more elastomer mounts placed between the shaft support 3 and the base 2. For example, with reference to the schematic illustration in Figure 2, the balancer 1 can comprise four elastomer mounts positioned symmetrically on two opposite sides of the shaft rotation axis R.

Preferably, the stiffness coefficients of the elastic elements 6 are selected such that, when the shaft 4 rotates at an angular speed co, the balancer 1 (with the wheel 5) is sufficiently far from a resonance condition, while maintaining at the same time sufficiently big amplitudes of vibrations of the shaft support 3 relative to the base 2.

The balancer comprises a first 7 and a second 8 inertial measuring units IMUs each configured to measure a first ($a_x$) and/or a second ($a_y$) and/or a third accelerations ($a_z$), and/or a first ($\omega_x$) and/or a second ($\omega_y$) and/or a third ($\omega_z$) angular speeds along three axes x, y, z, of respective reference frames integrally moving with the IMUs, and to generate signals representative of the same.

The first IMU 7 (hereinafter "fixed IMU 7") is fixedly positioned on the shaft support 3. Preferably, it is oriented such that an axis z of the first IMU reference frame is parallel to the shaft rotation axis R, and the other axes x, y lie on a plane perpendicular to the shaft rotation axis R. Particularly, the axis y is preferably parallel to the gravity acceleration $g_n$, i.e. it is oriented vertically. As a consequence, the axis x is oriented horizontally. Advantageously, the axes x and y correspond to the vibration directions of the shaft support 3 relative to the base 2.

Preferably, the fixed IMU 7 is configured to detect at least the three angular speeds along the fixed IMU reference axes x, y, z. Still more preferably, the fixed IMU 7 is configured to detect the accelerations along axes x and z, i.e. along horizontal directions.

The second IMU 8 (hereinafter "rotating IMU 8") is fixedly positioned on the shaft 4, so to rotate integrally with the latter, at a radial distance from the shaft rotation axis R. Preferably, it is oriented such that an axis z of the second IMU reference frame is parallel to the shaft rotation axis R, and the other axes x and y lie on a plane perpendicular to the shaft rotation axis R.

Preferably the rotating IMU 8 is configured to detect at least the angular speed along the rotating IMU reference axes x, y, i.e. the axes lying in the plane perpendicular to the shaft rotation axis R.

Since the rotating IMU 8 introduces an unbalance in the system, advantageously the balancer 1 comprises a balancing mass 9 having the same mass as the rotating IMU 8, and fixedly positioned on the shaft 4, so to rotate integrally with the latter, in a position radially opposite to the radial position of the rotating IMU 8 with reference to the rotation axis R.

It is to be noted that a balancer according to the prior art (Figure 1) can be easily converted into a balancer according to the invention. This can be obtained by interposing the one or more elastic elements 6 between the base 102 and the shaft support 103 and by placing the first 7 and the second IMU 8 respectively on the shaft support 103 and on the shaft 104 in the positions described with reference to the shaft support 3 and the shaft 4. The existing force sensors can be then removed as they are no longer necessary for determining the unbalances.

On the basis of the signals coming from the fixed 7 and the rotating 8 IMUs it is possible to determine the severity (i.e. the mass) and the angular position of unbalances, both static (both on the inner and the outer sides) and dynamic.

Particularly, the Applicant has observed that each signal coming from the IMUs 7 and 8 shows harmonic components at $k\omega$, $k=1,2,...$, where $\omega$ is the shaft rotation speed. Therefore, each signal can be represented as:

$$y\left(t\right) = \boldsymbol{A} \cdot \sin(k\omega t + \boldsymbol{\phi})$$

wherein:

- A is the signal amplitude;
- $\phi$ is the signal phase;
- t is the time.

Surprisingly, the Applicant has observed that the unbalance severity is related to the signals amplitudes *A*, whereas the unbalance angular position is related to the signals phases $\phi$. This is true both for the static and dynamic unbalances. Therefore, multiple tests have been performed for determining relations between signals coming from the IMUs 7, 8 and the severity and the angular position of unbalances.

Regarding static unbalances, tests have been performed by introducing on a balanced wheel unbalances by means of known weights, each positioned in subsequent multiple known angular positions (referred to a conventional zero of the wheel). This procedure has been followed for both the inner and the outer planes of the wheel.

Concerning the dynamic unbalance, two masses have been attached on different wheel planes and in opposite positions, i.e., forming an angle of 180° from each other. Each couple has been positioned in subsequent multiple known angular positions (referred to a conventional zero of the wheel). Then, the same tests have been repeated for masses couples of increasing weights.

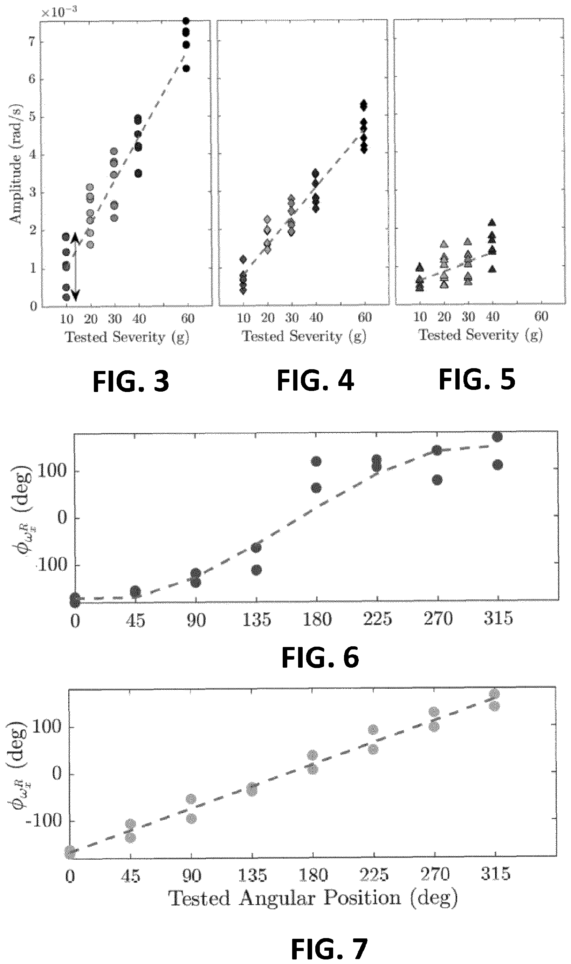

From the above tests it was observed that the relation between the amplitudes of the signals coming from the fixed IMU 7 and the unbalance severity is substantially linear, both in the static and in the dynamic cases. For example, Figure 3 shows the amplitude of the rotational speed along axis x (as defined above) of the fixed IMU 7 for the static unbalance in the wheel outer plane. Particularly, the signal amplitude as a function of the tested severity (i.e. as a function of the unbalancing masses applied) is shown. As can be seen, the amplitude shows a substantially linear trend. The dispersion for each severity is due to the angular position variation of the unbalancing mass. Figure 4 shows the amplitude of the rotational speed along axis x of the fixed IMU 7 for the static unbalance in the wheel inner plane. As can be seen, again, the trend is substantially linear, with the same dispersion phenomenon. Then, Figure 5 shows the amplitude of the rotational speed along axis x of the fixed IMU 7 for the dynamic unbalance case for several couples of opposed masses. Once again, the amplitude shows a substantially linear trend with a dispersion phenomenon caused by the angular position variation.

On the other hand, tests have shown that the relation between the signal phases of the signals coming from the rotating IMU 8 and the unbalance angular position is non-linear and, in addition, varies as a function of the mass severity. For example, Figure 6 shows the phase of the rotational speed along axis x of the rotating IMU 8 for a specific static unbalanced mass positioned in the wheel outer plane. Particularly, the diagram shows the signal phase as a function of the tested unbalance angular position. Figure 7 shows the result of the same test for a bigger unbalancing mass.

In view of the above results, predetermined maps can be constructed:

- (substantially linear) maps linking the amplitudes of the signals coming from the fixed IMU 7 to the unbalance severity. These maps are constructed for thestatic cases (both inner sides and outer sides) and for the dynamic case. The (discrete) tested results can be modelled for example with a relation $f$ of the type:

$$\hat{m} = f(A^F_{a_x}, A^F_{a_z}, A^F_{\omega_x}, A^F_{\omega_y}, A^F_{\omega_z})$$

wherein:

- $\hat{m}$ is the estimated severity;
- $A^F_{a_x}$ is the amplitude of the acceleration signal along the axis x of the fixed IMU 7;
- $A^F_{a_z}$ is the amplitude of the acceleration signal along the axis z of the fixed IMU 7;
- $A^F_{\omega_x}$ is the amplitude of the angular speed signal along the axis x of the fixed IMU 7;
- $A^F_{\omega_y}$ is the amplitude of the angular speed signal along the axis y of the fixed IMU 7;
- $A^F_{\omega_z}$ is the amplitude of the angular speed signal along the axis z of the fixed IMU 7.

This continuous relation can be obtained for example using a least square model.

- (non linear) maps linking the phases of the signals coming from the rotating IMU 8 and the unbalance severity, determined as described above, to the unbalance angular position. The discrete tested results can be modelled for example with a relation $f$ of the type:

$$\hat{\phi} = f(\hat{m}, \phi^R_{\omega_x}, \phi^R_{\omega_y})$$

wherein:

- $\hat{\phi}$ is the estimated unbalance angular position;
- $\hat{m}$ is the estimated unbalance severity;
- $\phi^R_{\omega_x}$ is the phase of the angular speed signal along the axis x of the rotating IMU 8;
- $\phi^R_{\omega_y}$ is the phase of the angular speed signal along the axis y of the rotating IMU 8.

This (continuous) relation can be obtained for example using a neural network.

These maps can be constructed for the static cases (both inner and outer sides) and for the dynamic case.

Once these maps are determined (this can be done for each specific balancer according to the invention), it is possible to estimate the desired parameters (unbalance severity and unbalance position) on the basis of the signals coming from the fixed and rotating IMUs and of the maps.

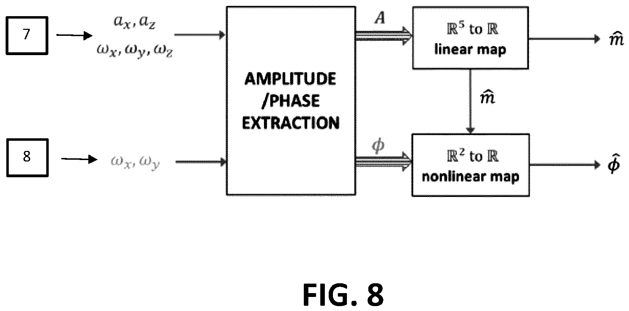

Figure 8 shows what described above. Given the fixed and the rotating IMUs signals, the respective amplitudes A and phases $\phi$, according to the above description, are extracted. Signal amplitudes are used for estimating the unbalance severity $\hat{m}$ Then, given the estimated unbalance severity $\hat{m}$, signal phases $\phi$ are used for estimating the unbalance angular position $\hat{\phi}$

To this purpose, advantageously, the balancer 1 comprises a control unit configured for:

- receiving the signals coming from the fixed IMU 7 and from the rotating IMU 8;
- determining from the signals coming from the fixed IMU 7 an estimated unbalance severity on the basis of a first predetermined relation, particularly on the basis of the above-mentioned predetermined linear maps linking the signal amplitudes to the to the unbalance severity;
- determining from the signals coming from the rotating IMU 8 an estimated unbalance position on the basis of the estimated unbalance severity and of a second predetermined relation, particularly on the basis of the above-mentioned predetermined non-linear maps linking the unbalance severity and the signal phases to the unbalance angular position.

It is to be noted that the maps can be memorized in a memory module (not shown in the Figures) comprised in the control unit of the balancer 1.

It is further to be noted that the above-mentioned first and second predetermined relations are obtained for the static unbalance on the wheel inner side, for the static unbalance on the wheel outer side and for the dynamic unbalance.

In principle, when a user operates the balancer according to the invention, it is not known whether the wheel to be balanced is affected by a static unbalance (on the inner side, on the outer sided, or both) and/or by a dynamic unbalance.

Therefore, according to a possible embodiment, the wheel balancing can be carried out by using a trial and error approach. In other words, the user can test each condition (for example by selecting the supposed unbalance condition on the machine, which, as a consequence, considers only the relevant maps), obtaining estimated unbalance severity and angular position, apply the balancing masses and then possibly repeat the tests for the same supposed unbalance and/or for other types of unbalances. This approach can be followed until a low or no unbalance of any type is detected at all.

According to another embodiment, the control unit is configured to distinguish the most likely unbalance condition on the basis of the predominant signals coming from the fixed and rotating IMUs and then consider only the maps corresponding to the determined condition. In this case, the control unit is advantageously configured for outputting the determined unbalance condition (i.e. static unbalance on the inner side, static unbalance on the outer side, or dynamic unbalance), the unbalance severity and the unbalance angular position for the determined condition.

**Claims**

1. A balancer (1) for balancing a rotor (5), particularly a vehicle wheel, comprising:

   - a base (2);
   - a shaft support (3) connected to the base (2);
   - a shaft (4) rotatable along a rotation axis (R) relative to the shaft support (3), configured such that the rotor (5) to be balanced can be mounted on the shaft (4);
   - a motor for actuating the shaft (4);

   **characterized in that** it further comprises:

   - one or more elastic elements (6) positioned between the shaft support (3) and the base (2), such that the shaft support (3) is elastically suspended over the base (2);
   - a first IMU (7) fixedly positioned on the shaft support (3) and configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the first IMU (7), and to generate signals representative of the same;
   - a second IMU (8) fixedly positioned on the shaft (4) at a radial distance from the shaft rotation axis (R), and configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the second IMU (8), and to generate signals representative of the same.

2. Balancer (1) according to claim 1, wherein in the balancer (1) normal condition of use, the shaft rotation axis (R) is horizontal.

3. Balancer (1) according to claim 1 or 2, wherein the first IMU (7) is oriented such that a first axis (z) of the first IMU reference frame is parallel to the shaft rotation axis (R) and the other two axes (x, y) lie on a plane perpendicular to the shaft rotation axis (R).

4. Balancer (1) according to claim 3, wherein the first IMU (7) is oriented such that a second (y) of said other two axes (x, y) is oriented vertically and a third (x) of said other two axes (x, y) is oriented horizontally.

5. Balancer (1) according to any of the preceding claims, wherein the first IMU (7) is configured to detect the first ($\omega_z$), the second ($\omega_y$) and the third ($\omega_x$) angular speeds along said three axes (x, y, z) of the first IMU reference frame.

6. Balancer (1) according to claim 5, wherein the fixed IMU (7) is configured to further detect the first ($a_z$) and the third ($a_x$) accelerations along said first (z) and third (x) axes of the first IMU reference frame.

7. Balancer (1) according to any of the preceding claims, wherein the second IMU (8) is oriented such that a first axis (z) of the second IMU reference frame is parallel to the shaft rotation axis (R), and a second (y) and a third (x) axes of said second IMU reference frame lie on a plane perpendicular to the shaft rotation axis (R).

8. Balancer (1) according to any of the preceding claims, wherein the second IMU (8) is configured to detect the second ($\omega_y$) and the third ($\omega_x$) angular speeds along said second (y) and third (x) axes of the second IMU reference frame.

9. Balancer (1) according to any of the preceding claims, wherein the one or more elastic elements (6) are configured such that the shaft support (3) can oscillate vertically and horizontally relative to the base (2).

10. Balancer (1) according to claim 9, wherein the one or more elastic elements (6) have two different stiffness coefficients along the vertical and the horizontal displacement directions of the shaft support (3) relative to the base (2).

11. Balancer (1) according to any of the preceding claims, wherein the one or more elastic elements (6) comprise one or more elastomer mounts placed between the shaft support (3) and the base (2).

12. Balancer (1) according to any of the preceding claims, further comprising a balancing mass (9) having the same mass as the second IMU (8), said balancing mass (9) being fixedly positioned on the shaft (4) in a position radially opposite to the radial position of the second IMU (8).

13. Method for updating a balancer (101) for balancing a rotor (105), particularly a vehicle wheel, comprising a base (102), a shaft support (103) fixedly connected to the base (102), a shaft (104) rotatable along a rotation axis (R) relative to the shaft support (103), a motor for actuating the shaft (104); **characterized in that** the method comprises:

- positioning one or more elastic elements (6) between the shaft support (103) and the base (102), such that the shaft support (103) becomes elastically suspended over the base (102);
- fixedly positioning a first IMU (7) on the shaft support (103), said first IMU (7) being configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the first IMU (7), and to generate signals representative of the same;
- fixedly positioning a second IMU (8) on the shaft (104) at a radial distance from the shaft rotation axis (R), said second IMU (8) being configured to measure a first ($a_z$) and/or a second ($a_y$) and/or a third accelerations ($a_x$), and/or a first ($\omega_z$) and/or a second ($\omega_y$) and/or a third ($\omega_x$) angular speeds along three axes (x, y, z) of a reference frame integrally moving with the second IMU (8), and to generate signals representative of the same.

**Patentansprüche**

1. Auswuchtvorrichtung (1) zum Auswuchten eines Rotors (5), insbesondere eines Fahrzeugrades, umfassend:

eine Basis (2);
einen Wellenträger (3), der mit der Basis (2) verbunden ist;
eine Welle (4), die entlang einer Drehachse (R) relativ zum Wellenträger (3) drehbar ist und so ausgelegt ist, dass der auszuwuchtende Rotor (5) auf der Welle (4) montiert werden kann;
einen Motor zum Antreiben der Welle (4);
**dadurch gekennzeichnet, dass** sie ferner umfasst:

ein oder mehrere elastische Elemente (6), die zwischen dem Wellenträger (3) und der Basis (2) angeordnet sind, derart, dass der Wellenträger (3) elastisch über der Basis (2) aufgehängt ist;
eine erste IMU (7), die fest auf dem Wellenträger (3) angeordnet ist und dafür ausgelegt ist, eine erste ($a_z$) und/oder eine zweite ($a_y$) und/oder eine dritte Beschleunigung ($a_x$) und/oder eine erste ($\omega_z$) und/oder eine zweite ($\omega_y$) und/oder eine dritte ($\omega_x$) Winkelgeschwindigkeit entlang dreier Achsen (x, y, z) eines Bezugssystems zu messen, das sich gemeinsam mit der ersten IMU (7) bewegt, und um Signale zu erzeugen, die diese repräsentieren;
eine zweite IMU (8), die fest auf der Welle (4) in einem radialen Abstand von der Wellendrehachse (R) angeordnet und dafür ausgelegt ist, eine erste ($a_z$) und/oder eine zweite ($a_y$) und/oder eine dritte Beschleunigung ($a_x$) und/oder eine erste ($\omega_z$) und/oder eine zweite ($\omega_y$) und/oder eine dritte ($\omega_x$) Winkelgeschwindigkeit entlang dreier Achsen (x, y, z) eines Bezugssystems zu messen, das sich gemeinsam mit der zweiten IMU (8) bewegt, und um Signale zu erzeugen, die diese repräsentieren.

2. Auswuchtvorrichtung (1) nach Anspruch 1, wobei im normalen Betriebszustand der Auswuchtvorrichtung (1) die Wellendrehachse (R) horizontal ist.

3. Auswuchtvorrichtung (1) nach Anspruch 1 oder 2, wobei die erste IMU (7) so ausgerichtet ist, dass eine erste Achse (z) des ersten IMU-Bezugssystems parallel zur Wellendrehachse (R) liegt und die zwei anderen Achsen (x, y) in einer Ebene senkrecht zur Wellendrehachse (R) liegen.

4. Auswuchtvorrichtung (1) nach Anspruch 3, wobei die erste IMU (7) so ausgerichtet ist, dass eine zweite (y) der zwei anderen Achsen (x, y) vertikal ausgerichtet ist und eine dritte (x) der zwei anderen Achsen (x, y) horizontal ausgerichtet ist.

5. Auswuchtvorrichtung (1) nach einem der vorhergehenden Ansprüche, wobei die erste IMU (7) dafür ausgelegt ist, die erste ($\omega_z$), die zweite ($\omega_y$) und die dritte ($\omega_x$) Winkelgeschwindigkeit entlang der drei Achsen (x, y, z) des ersten IMU-Bezugssystems zu erfassen.

6. Auswuchtvorrichtung (1) nach Anspruch 5, wobei die feste IMU (7) dafür ausgelegt ist, ferner die erste ($a_z$) und die dritte ($a_x$) Beschleunigung entlang der ersten (z) und der dritten (x) Achse des ersten IMU-Bezugssystems zu erfassen.

7. Auswuchtvorrichtung (1) nach einem der vorhergehenden Ansprüche, wobei die zweite IMU (8) so ausgerichtet ist, dass eine erste Achse (z) des zweiten IMU-Bezugssystems parallel zur Wellendrehachse (R) verläuft und eine zweite (y) und eine dritte (x) Achse des zweiten IMU-Bezugssystems in einer Ebene liegen, die senkrecht zur Wellendrehachse (R) verläuft.

8. Auswuchtvorrichtung (1) nach einem der vorhergehenden Ansprüche, wobei die zweite IMU (8) dafür ausgelegt ist, die zweite ($\omega_y$) und die dritte ($\omega_x$) Winkelgeschwindigkeit entlang der zweiten (y) und dritten (x) Achse des zweiten IMU-Bezugssystems zu erfassen.

9. Auswuchtvorrichtung (1) nach einem der vorhergehenden Ansprüche, wobei das eine oder die mehreren elastischen Elemente (6) so ausgelegt sind, dass der Wellenträger (3) relativ zur Basis (2) vertikal und horizontal schwingen kann.

10. Auswuchtvorrichtung (1) nach Anspruch 9, wobei das eine oder mehreren elastischen Elemente (6) zwei unterschiedliche Steifigkeitskoeffizienten entlang der vertikalen und der horizontalen Verschiebungsrichtung des Wellenträgers (3) relativ zur Basis (2) aufweisen.

11. Auswuchtvorrichtung (1) nach einem der vorhergehenden Ansprüche, wobei das eine oder die mehreren elastischen Elemente (6) ein oder mehrere Elastomerlager umfassen, die zwischen dem Wellenträger (3) und der Basis (2) angeordnet sind.

12. Auswuchtvorrichtung (1) nach einem der vorhergehenden Ansprüche, ferner umfassend eine Ausgleichsmasse (9), die die gleiche Masse wie die zweite IMU (8) aufweist, wobei die Ausgleichsmasse (9) fest auf der Welle (4) in einer Position radial gegenüber der radialen Position der zweiten IMU (8) angeordnet ist.

13. Verfahren zum Aktualisieren einer Auswuchtvorrichtung (101) zum Auswuchten eines Rotors (105), insbesondere eines Fahrzeugrades, umfassend eine Basis (102), einen fest mit der Basis (102) verbundenen Wellenträger (103), eine Welle (104), die entlang einer Drehachse (R) relativ zum Wellenträger (103) drehbar ist, einen Motor zum Antreiben der Welle (104); **dadurch gekennzeichnet, dass** das Verfahren umfasst:

Anordnen eines oder mehrerer elastischer Elemente (6) zwischen dem Wellenträger (103) und der Basis (102), derart, dass der Wellenträger (103) elastisch über der Basis (102) aufgehängt wird;
festes Anordnen einer ersten IMU (7) auf dem Wellenträger (103), wobei die erste IMU (7) dafür ausgelegt ist, eine erste ($a_z$) und/oder eine zweite ($a_y$) und/oder eine dritte Beschleunigung ($a_x$) und/oder eine erste ($\omega_z$) und/oder eine zweite ($\omega_y$) und/oder eine dritte ($\omega_x$) Winkelgeschwindigkeit entlang dreier Achsen (x, y, z) eines Bezugssystems zu messen, das sich gemeinsam mit der ersten IMU (7) bewegt, und um Signale zu erzeugen, die diese repräsentieren;
festes Anordnen einer zweiten IMU (8) auf der Welle (104) in einem radialen Abstand von der Wellendrehachse (R), wobei die zweite IMU (8) dafür ausgelegt ist, eine erste ($a_z$) und/oder eine zweite ($a_y$) und/oder eine dritte Beschleunigung ($a_x$) und/oder eine erste ($\omega_z$) und/oder eine zweite ($\omega_y$) und/oder eine dritte ($\omega_x$) Winkelgeschwindigkeit entlang dreier Achsen (x, y, z) eines Bezugssystems zu messen, das sich gemeinsam mit der zweiten IMU (8) bewegt, und um Signale zu erzeugen, die diese repräsentieren.

**Revendications**

1. Dispositif d'équilibrage (1) pour équilibrer un rotor (5), particulièrement une roue de véhicule, comprenant :

- une base (2) ;
- un support d'arbre (3) relié à la base (2) ;
- un arbre (4) rotatif le long d'un axe de rotation (R) relativement au support d'arbre (3), configuré de telle sorte que le rotor (5) destiné à être équilibré puisse être monté sur l'arbre (4) ;
- un moteur pour actionner l'arbre (4) ;

**caractérisé en ce qu'**il comprend en outre :

- un ou plusieurs éléments élastiques (6) positionnés entre le support d'arbre (3) et la base (2), de telle sorte que le support d'arbre (3) soit élastiquement suspendu par-dessus la base (2) ;

- une première IMU (7) positionnée de façon fixe sur le support d'arbre (3) et configurée pour mesurer une première ($a_z$) et/ou une deuxième ($a_y$) et/ou une troisième ($a_x$) accélérations, et/ou une première ($\omega_z$) et/ou un deuxième ($\omega_y$) et/ou une troisième ($\omega_x$) vitesses angulaires le long de trois axes (x, y, z) d'un cadre de référence se déplaçant de façon monobloc avec la première IMU (7), et pour générer des signaux représentatifs de celles-ci ;

- une seconde IMU (8) positionnée de façon fixe sur l'arbre (4) à une distance radiale de l'axe de rotation d'arbre (R), et configurée pour mesurer une première ($a_z$) et/ou une deuxième ($a_y$) et/ou une troisième ($a_x$) accélérations, et/ou une première ($\omega_z$) et/ou une deuxième ($\omega_y$) et/ou une troisième ($\omega_x$) vitesses angulaires le long de trois axes (x, y, z) d'un cadre de référence se déplaçant de façon monobloc avec la seconde IMU (8), et pour générer des signaux représentative de celles-ci.

2. Dispositif d'équilibrage (1) selon la revendication 1, dans lequel, dans la condition normale d'utilisation du dispositif d'équilibrage (1), l'axe de rotation d'arbre (R) est horizontal.

3. Dispositif d'équilibrage (1) selon la revendication 1 ou 2, dans lequel la première IMU (7) est orientée de telle sorte qu'un premier axe (z) du cadre de référence de la première IMU soit parallèle à l'axe de rotation d'arbre (R) et les deux autres axes (x, y) se trouvent sur un plan perpendiculaire à l'axe de rotation d'arbre (R).

4. Dispositif d'équilibrage (1) selon la revendication 3, dans lequel la première IMU (7) est orientée de telle sorte qu'un deuxième (y) desdits deux autres axes (x, y) soit orienté verticalement et un troisième (x) desdits deux autres axes (x, y) soit orienté horizontalement.

5. Dispositif d'équilibrage (1) selon l'une quelconque des revendications précédentes, dans lequel la première IMU (7) est configurée pour détecter la première ($\omega_z$), la deuxième ($\omega_y$) et la troisième ($\omega_x$) vitesses angulaires le long desdits trois axes (x, y, z) du cadre de référence de la première IMU.

6. Dispositif d'équilibrage (1) selon la revendication 5, dans lequel la IMU fixe (7) est configurée pour en outre détecter la première ($a_z$) et la troisième ($a_x$) accélérations le long desdits premier (z) et troisième (x) axes du cadre de référence de la première IMU.

7. Dispositif d'équilibrage (1) selon l'une quelconque des revendications précédentes, dans lequel la seconde IMU (8) est orientée de telle sorte qu'un premier axe (z) du cadre de référence de la seconde IMU soit parallèle à l'axe de rotation d'arbre (R), et un deuxième (y) et un troisième (x) axes dudit cadre de référence de seconde IMU se trouvent sur un plan perpendiculaire à l'axe de rotation d'arbre (R).

8. Dispositif d'équilibrage (1) selon l'une quelconque des revendications précédentes, dans lequel la seconde IMU (8) est configurée pour détecter la deuxième ($\omega_y$) et la troisième ($\omega_x$) vitesses angulaires le long desdits deuxième (y) et troisième (x) axes du cadre de référence de la seconde IMU.

9. Dispositif d'équilibrage (1) selon l'une quelconque des revendications précédentes, dans lequel l'un ou les plusieurs éléments élastiques (6) sont configurés de telle sorte que le support d'arbre (3) puisse osciller verticalement et horizontalement relativement à la base (2).

10. Dispositif d'équilibrage (1) selon la revendication 9, dans lequel l'un ou les plusieurs éléments élastiques (6) ont deux coefficients de rigidité différents le long des directions de déplacement verticale et horizontale du support d'arbre (3) relativement à la base (2).

11. Dispositif d'équilibrage (1) selon l'une quelconque des revendications précédentes, dans lequel l'un ou les plusieurs éléments élastiques (6) comprennent un ou plusieurs appuis élastomères placés entre le support d'arbre (3) et la base (2).

12. Dispositif d'équilibrage (1) selon l'une quelconque des revendications précédentes, comprenant en outre une masse d'équilibrage (9) ayant la même masse que la seconde IMU (8), ladite masse d'équilibrage (9) étant positionnée de façon fixe sur l'arbre (4) dans une position radialement opposée à la position radiale de la seconde IMU (8).

13. Procédé pour rénover un dispositif d'équilibrage (101) pour équilibrer un rotor (105), particulièrement un roue de véhicule, comprenant une base (102), un support d'arbre (103) relié fixement à la base (102), un arbre (104) rotatif le long d'un axe de rotation (R) relativement au support d'arbre (103), un moteur pour actionner l'arbre (104) ; **caractérisé en ce que** le procédé comprend :

- le positionnement d'un ou de plusieurs éléments élastiques (6) entre le support d'arbre (103) et la base (102), de telle sorte que le support d'arbre (103) soit élastiquement suspendu par-dessus la base (102) ;

- le positionnement fixe d'une première IMU (7) sur le support d'arbre (103), ladite première IMU (7) étant configurée pour mesurer une première ($a_z$) et/ou une deuxième ($a_y$) et/ou une troisième ($a_x$) accélérations, et/ou une première ($\omega_z$) et/ou une deuxième ($\omega_y$) et/ou une troisième ($\omega_x$) vitesses angulaires le long de trois axes (x, y, z) d'un cadre de référence se déplaçant de façon monobloc avec la première IMU (7), et pour générer des signaux représentatifs de celles-ci ;

- le positionnement fixe d'une seconde IMU (8) sur l'arbre (104) à une distance radiale de l'axe de rotation d'arbre (R), ladite seconde IMU (8) étant configurée pour mesurer un première ($a_z$) et/ou une deuxième ($a_y$) et/ou une troisième ($a_x$) accélérations, et/ou une première ($\omega_z$) et/ou une deuxième ($\omega_y$) et/ou une troisième ($\omega_x$) vitesses angulaires le long de trois axes (x, y, z) d'un cadre de référence se déplaçant de façon monobloc avec la seconde IMU (8), et pour générer des signaux représentatifs de celles-ci.

FIG. 1 (PRIOR ART)

FIG. 2

**FIG. 3**     **FIG. 4**     **FIG. 5**

**FIG. 6**

**FIG. 7**

$7$ → $a_x, a_z$
$\omega_x, \omega_y, \omega_z$

$8$ → $\omega_x, \omega_y$

AMPLITUDE /PHASE EXTRACTION

$A$ → $\mathbb{R}^5$ to $\mathbb{R}$ linear map → $\hat{m}$

$\hat{m}$

$\phi$ → $\mathbb{R}^2$ to $\mathbb{R}$ nonlinear map → $\hat{\phi}$

# FIG. 8

**EP 3 839 469 B1**

## REFERENCES CITED IN THE DESCRIPTION

### Patent documents cited in the description

- US 2015167780 A1
- CN 107132048